# EUROPEAN PATENT SPECIFICATION

(11) **EP 1 651 063 B1**
(45) Date of publication and mention of the grant of the patent: **26.06.2013**
(21) Application number: 03817801.8
(22) Date of filing: 07.08.2003
(51) Int. Cl.: A23N 12/02, A23N 12/00, B01D 47/02

(54) **FRUIT CLEANSING APPARATUS WITH DUST DISPOSAL MEANS**
OBSTREINIGUNGSVORRICHTUNG MIT STAUBENTSORGUNGSMITTEL
APPAREIL DE NETTOYAGE DE FRUITS ÉQUIPÉ DE MOYENS D'ÉVACUATION DE POUSSIÈRE

(30) Priority: 29.07.2003 KR 2003052219
(43) Date of publication of application: 03.05.2006
(73) Proprietor: JEJU CITRUS GROWER'S AGRICULTURAL COOPERATIVE, Sogwipo-city, Jeju-do 697-801 (KR)
(72) Inventor: OH, Hong-sik, Sogwipo-city, Jeju-do 697-815 (KR)
(74) Representative: Neobard, William John
(86) International application number: PCT/KR2003/001591
(87) International publication number: WO 2005/011410

(56) References cited:
- CH-A- 412 807
- DE-A1- 2 939 367
- FR-A1- 2 507 865
- JP-A- 8 038 136
- JP-U- 61 037 794
- KR-A- 2003 067 607
- US-A- 2 073 837
- US-A- 2 199 831
- US-A- 5 285 548
- US-A- 5 329 845

## Description

### TECHNICAL FIELD

The present invention relates to dust removing means that constitutes a fruit cleansing apparatus, and more particularly to a fruit cleansing apparatus including dust removing means capable of filtering dust generated during fruit cleansing processes.

### BACKGROUND ART

In general, since fruits harvested by farmhouses contain a plurality of alien substances such as agricultural chemicals on the surfaces thereof, the fruits containing such alien substances are removed of the alien substances by a fruit cleansing apparatus to be forwarded.

A method of cleansing fruit by the above-described fruit cleansing apparatus includes a cleansing process of spraying cleansing solution such as water onto fruits and of applying predetermined friction to the surfaces of fruits to remove alien substances and a drying process of drying the cleansing solution.

However, the above-described cleansing process performed using the cleansing solution significantly deteriorates the sugar contents and the freshness of fruits.

This is because the above-described cleansing solution resides in the stomata distributed on the surfaces of fruits such that the sugar contents of the fruits evaporate when the fruits transpire through the stomata.

Also, according to the above-described cleansing method, dissolved alien substances such as agricultural chemicals reside in the stomata to produce contaminated fruits.

Thus, the applicant of the present invention filed a patent application No. 10-2003-0045037 under the title of "fruit cleansing apparatus including dust collecting system and fruit cleansing processes using the same (hereinafter, a conventional technology)" in order to solve the above-described problem.

According to the conventional technology disclosed by the applicant, in order to solve the problem of the above-described fruit cleansing apparatus, predetermined friction is applied to fruits 2 to be cleansed to separate alien substances from the fruits 2 without performing the cleansing process using cleansing solution, dusts 3 separated by blowing means 20 is led to an upper portion to vacuum inhale the dusts 3 led to the upper portion by the dust collector, and only the dusts 3 are filtered to discharge only the clean air to the outside. From US-2199831 a fruit cleansing apparatus is known, which comprises vacuum means for the removal of dusts generated during brushing of the produce.

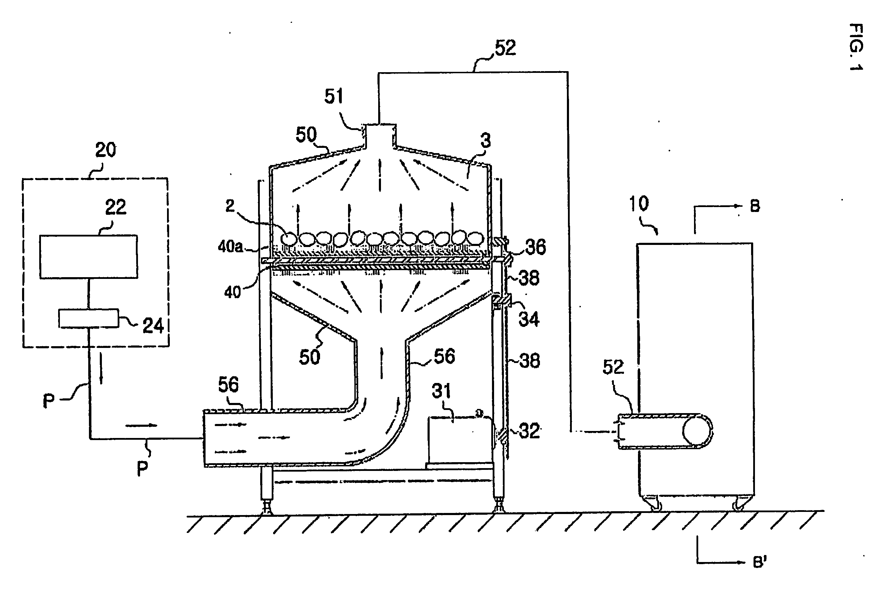

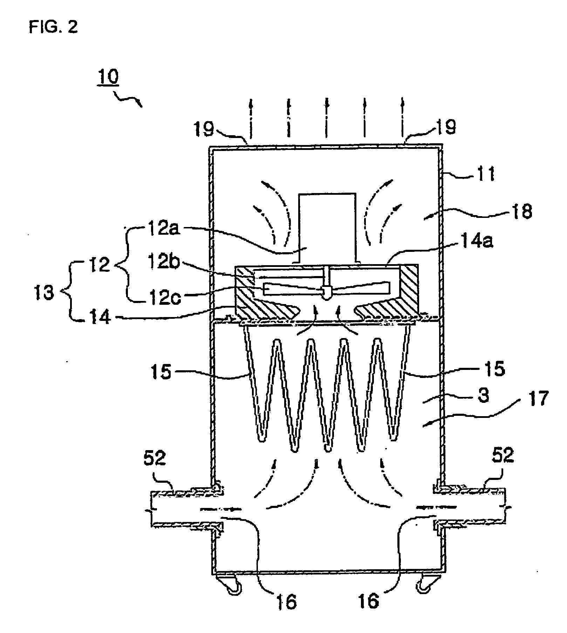

Fig. 1 illustrates a schematic structure of the fruit cleansing apparatus according to the conventional technology. Fig. 2 illustrates an inner structure of the dust collector.

The conventional technology will be described in detail with reference to the drawings. The conventional fruit cleansing apparatus includes a brush roll driving unit composed of a driving motor 31, a plurality of brush rolls 40, and power transmitting means 38, a hopper-shaped lower cover 55 having a duct 56 in the lower end and positioned below the plurality of brush rolls 40, blowing means 20 including a blowing fan 24 air-tight connected to the duct 56 to blow air toward the plurality of brush rolls 40 and a boiler 22 connected to the blowing fan 24 to provide warm air, an upper cover 50 whose upper portion is narrow and whose lower portion is wide and which is symmetrical with the lower cover 55, the upper cover 50 having a duct 51 in the upper end positioned above the plurality of brush rolls 40, and a bellows 52 whose one end is air-tight connected to the duct 51 and whose the other end is air-tight connected to an inhaling portion 17 of a dust collector 10 as described later.

The structure of the dust collector 10 will be described in detail. As illustrated in Fig. 2, the dust collector 10 includes a case 11, an inhaling unit 13 positioned in the center of the case to divide the case into an upper portion and a lower portion, a filter 15 positioned under the inhaling unit 13, inhaling holes 16 that pass through the lower sides of the case 11 below the filter 15, and a plurality of exhausting holes 19.

The inhaling unit 13 includes an inhaling guide 14 positioned on the filter 15 and having a hollow (that is not denoted by reference numeral), an inhaling wing 12c included in the hollow (that is not denoted by reference numeral) to be rotatable, and an impeller module 12 in which a rotation shaft 12b of the inhaling motor 12a and the inhaling wing 12c are shaft combined with each other.

The operating principle of the fruit cleansing apparatus including the dust collecting system having the above-described structure will be described. When fruit cleansing processes start, the impeller module 12, the driving motor 31, and the blowing fan 24 start to operate. As the driving motor 31 is rotated, the plurality of brush rolls 40 connected to the power transmitting means 38 are rotated at uniform speed. Also, the air heated by the boiler 22 is discharged upward to the brush rolls 40 via the blowing pipe P, the duct 56, and the lower cover 55. At this time, the surfaces of fruits 2 are rubbed with the furs 40a formed on the brush rolls 40 and the fruits 2 are horizontally moved. At this time, the alien substances such as agricultural chemicals attached to the surfaces of the fruits 2 are separated to generate a large amount of dusts 3. Thus, the warm air discharged upward by the above-described blowing means 20 leads the dusts 3 to the upper portion and completely dries the dew generated on the surfaces of the fruits 2. On the other hand, the dusts 3 led to the upper portion pass through the upper cover 50, the duct 51, and the bellows 52 and are vacuum flown to the inhaling portion 17 of the dust collector 10. While the inhaled air including the dusts 3 is flown to the inhaling portion 17 of the above-described dust collector 10 and passes through the filter 15, only the dusts 3 are filtered to discharge only the clean air to the outside through the exhausting holes 19.

In short, according to the above-described conventional technology, it is possible to reduce the time required for drying the dew generated on the surfaces of fruits and to prevent the freshness and the sugar contents of fruits from deteriorating.

However, according to the above-described dust collecting system, it is not possible to filter corpuscular dusts by the filter 15. That is, when a minute filter is applied, it is possible to filter the corpuscular dusts. However, vacuum absorption efficiency significantly deteriorates and a large amount of load is applied to the inhaling motor 12a such that it is difficult to use the dust collecting system for a long time. Accordingly, the corpuscular dusts are flown to a work place to provide contaminated working environments.

Also, the filter 15 must be periodically exchanged and the filter 15 and the inhaling portion 17 inside the dust collector 10 must be periodically cleaned such that it is difficult to maintain and repair the dust collecting system.

Furthermore, since the impeller module 12 creates a large amount of noise, it is difficult to provide quiet working environments.

### DISCLOSURE OF INVENTION

In order to solve the above problems, it is an object of the present invention to provide a fruit cleansing apparatus including dust removing means for vacuum inhaling dusts by an air eject system having high energy efficiency without creating noise and for dissolving only the dusts by a solvent such as water to remove dusts.

It is another object of the present invention to provide a fruit cleansing apparatus including dust removing means for discharging clean air obtained by completing the above-described dust removing processes to the outside and for providing fresh air to devices for performing the fruit cleansing processes to blow air to the fruits to be cleaned again such that dusts are not flown to a working place.

It is still another object of the present invention to provide a fruit cleansing apparatus including dust removing means capable of providing comfortable working environments, of automating dust removing processes, and of being easily maintained and repaired.

To achieve the objects of the present invention, there is provided a fruit cleansing apparatus comprising a cleansing device for separating alien substances attached to the surfaces of fruits from the fruits by predetermined friction, an inhaling unit for vacuum inhaling dusts separated from the fruits, and a filtering unit connected to the inhaling unit to filter the dusts. The inhaling unit comprises an air eject connected to the cleansing device to vacuum inhale the dusts and an air supplier for supplying high pressure air to the air eject. The filtering unit has exhausting holes penetrating the upper end thereof, has its lower end penetrated by a pipe air-tight connected to an exhausting pipe of the air eject, and has a dust removing tank accommodating a predetermined amount of solvent inside.

An opening and closing valve is preferably added to the pipe to control the amount of vacuum inhaled air.

A supply pipe for supplying the solvent from the outside is preferably fastened to the dust removing tank and an opening and closing valve for supplying and intercepting a solvent is preferably added to the supply pipe adjacent to the dust removing tank.

The fruit cleansing apparatus preferably further comprises a ventilating/draining unit connected to the dust removing tank and the pipe to feed back the solvent accommodated in the dust removing tank to the dust removing tank or to discharge the solvent accommodated in the dust removing tank to the outside.

The solvent is preferably water or oil.

The opening and closing valve is preferably a solenoid valve or a pneumatic valve.

The fruit cleansing apparatus preferably further comprises blowing means composed of a boiler air-tight connected to the exhausting holes of the dust removing tank by the pipe and a blowing fan connected to the boiler to flow air to the cleansing device.

The exhausting holes of the dust removing tank are preferably connected to the boiler by the pipe such that the filtered clean air is flown to the blowing means.

The above-described pipe is formed of a pipe and a bellows having tension against predetermined pressure and the above-described opening and closing valves refer to a single-acting opening and closing valve for simply opening and closing a flow channel and a double-acting opening and closing valve that changes the flow channel of water and/or the flow channel of air when the same is turned on/off

The present invention now will be described more fully with reference to the accompanying drawings, in which a preferred embodiment of the invention is shown. This invention may, however, be embodied in many different forms and should not be construed as being limited to the embodiment set forth herein.

### BRIEF DESCRIPTION OF THE DRAWINGS

The objects and advantages of the present invention will be more clearly understood with reference to accompanying drawings and detailed description of the preferred embodiment below.
Fig. 1 illustrates a schematic structure of a conventional fruit cleansing apparatus;
Fig. 2 illustrates the inner structure of the dust collector of Fig. 1;
Fig. 3 is a schematic block diagram of a fruit cleansing apparatus according to the present invention;
Fig. 4 illustrates the structure of the fruit cleansing apparatus according to the present invention;
Fig. 5 illustrates the dust removing means illustrated in Fig. 4 in detail;
Fig. 6 illustrates the air eject illustrated in Fig. 5 in detail;
Figs. 7 and 8 illustrate examples of the operation of the opening and closing valve of the filter unit illustrated in Fig. 5;
Figs. 9 and 10 illustrate examples of the operation of the opening and closing valve of the ventilating and draining unit illustrated in Fig. 5; and
Fig. 11 is a sectional view taken along the line A-A' of Fig. 4.

### BEST MODE FOR CURRYING OUT THE INVENTION

Preferred embodiments of the present invention will be described in detail with reference to the attached drawings. This invention may, however, be embodied in many different forms and should not be construed as being limited to the embodiments set forth herein.

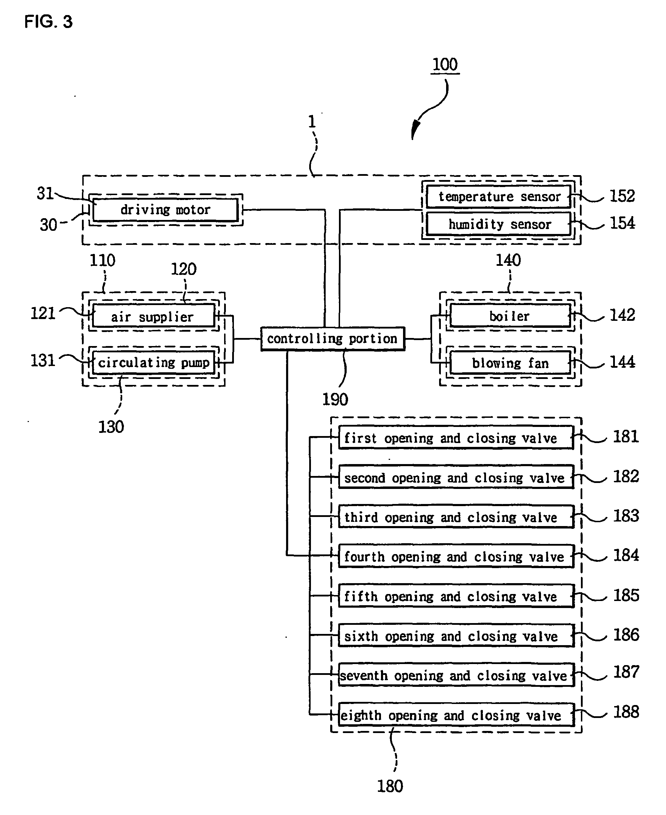

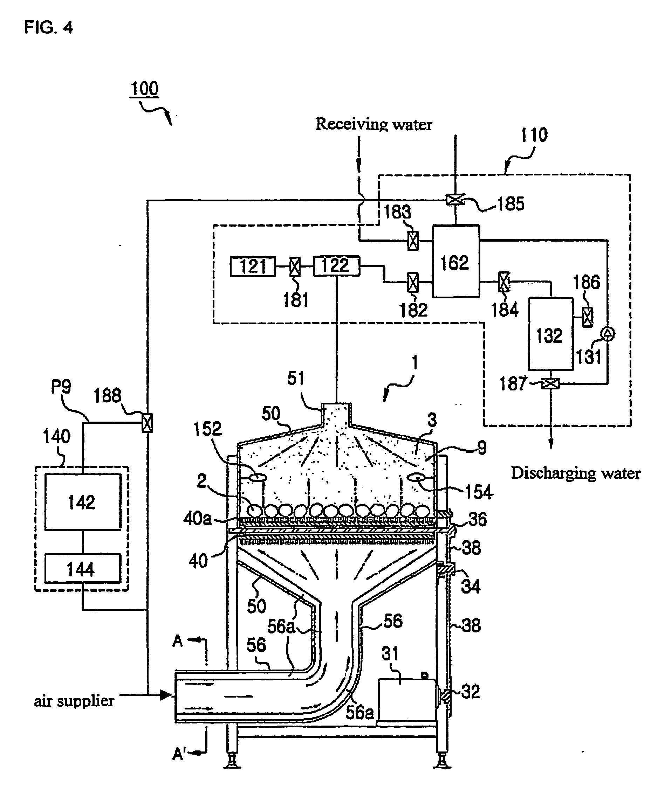

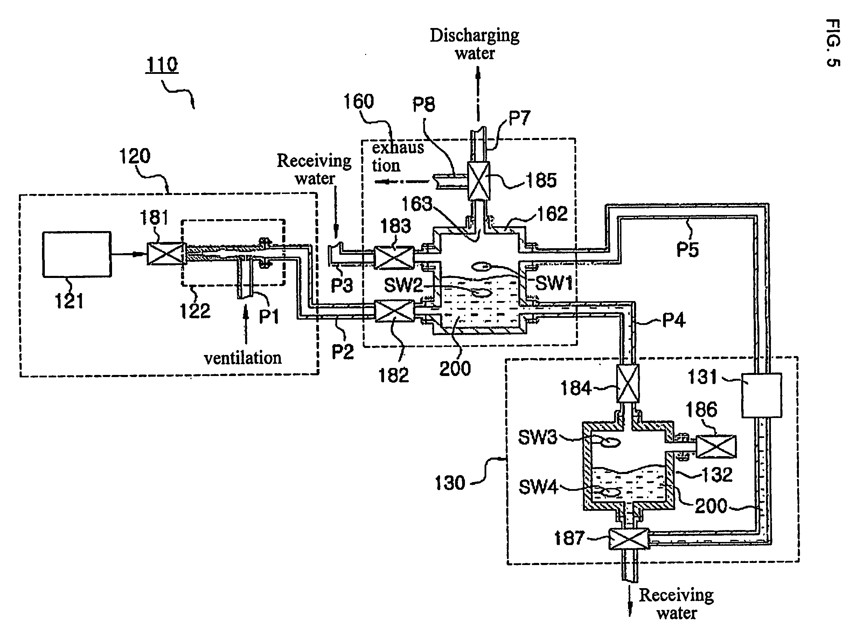

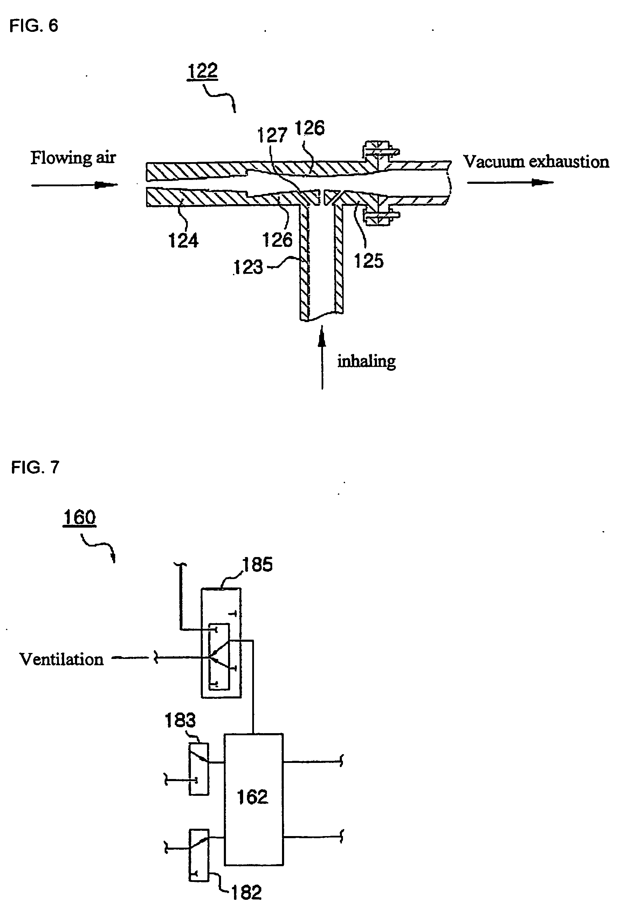

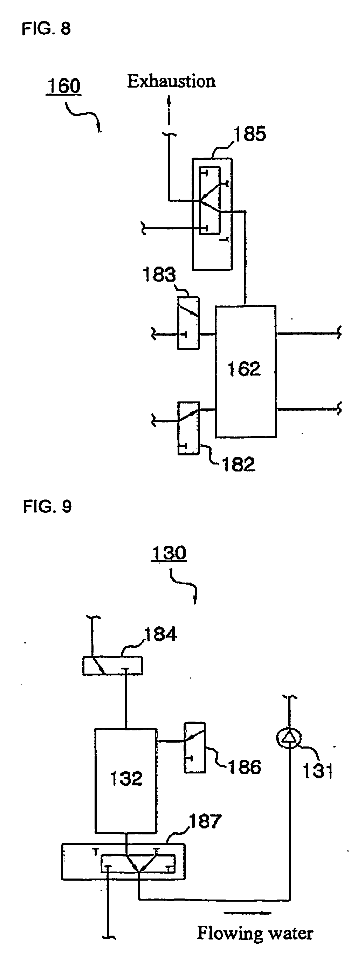

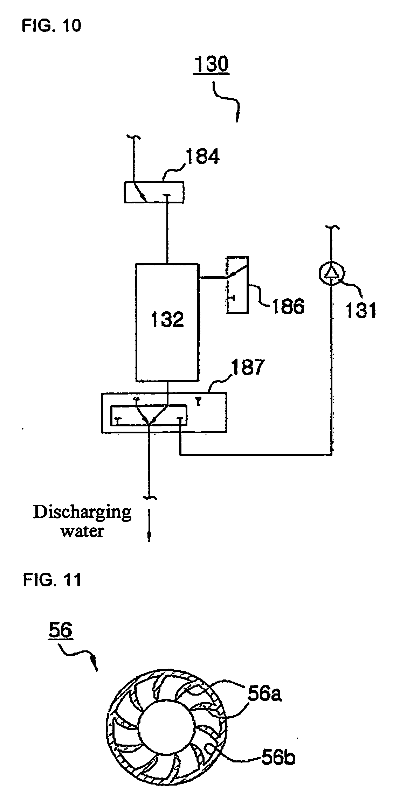

Fig. 3 is a schematic block diagram of a fruit cleansing apparatus 100 according to the present invention. Fig. 4 illustrates the structure of the fruit cleansing apparatus 100 according to the present invention. Fig. 5 illustrates the dust removing means 110 illustrated in Fig. 4 in detail. Fig. 6 illustrates the air eject 122 illustrated in Fig. 5 in detail. Figs. 7 and 8 illustrate examples of the operation of the opening and closing valve 160 of the filter unit illustrated in Fig. 5. Figs. 9 and 10 illustrate examples of the operation of the opening and closing valve of the ventilating and draining unit 130 illustrated in Fig. 5. Fig. 11 is a sectional view taken along the line A-A' of Fig. 4.

As illustrated in Figs. 3 to 11, the fruit cleansing apparatus 100 according to the present invention includes a cleansing device 1 in which a temperature sensor 152 and a humidity sensor 154 are arranged between brush rolls 40 and an upper cover 50 for tightly covering the upper portion of the brush rolls 40, dust removing means 110 including an inhaling unit 120 in which a duct 51 of the upper cover 50 of the cleansing device 1 is air-tight connected to an air eject 122 and a air supplier 121 for supplying high pressure air is connected to the air eject 122, a filtering unit 160 including a dust removing tank 162 connected to and fastened to the other end of the air eject 122, a ventilating and draining unit 130 composed of a water storing trap 132 connected to and fastened to the dust removing tank 162 and a ventilating pump 131 fastened between the dust removing tank 162 and the ventilating pump 131, and an opening and closing valve unit 180 in which a plurality of opening and closing valves 181 to 188 are fastened among the above-described components 121, 122, 162, and 131, blowing means 140 including a boiler 142 connected to the dust removing means 110 to heat the filtered clean air and a blowing fan 144 connected to the boiler 142 and air-tight connected to a duct 56 of a lower cover 55 of the cleansing device 1 to supply warm air to the cleansing device 1, and a controlling portion 190 for controlling the cleansing device 1, the dust removing means 110, and the blowing means 140 (refer to Figs. 3 and 4).

The inhaling unit 120 and the filtering unit 160 will be described in more detail. In the inhaling unit 120, a first opening and closing valve 181 is provided between the air supplier 121 and the air eject 122 to control the strength of the air discharged from the air supplier 121 and to thus control the vacuum inhaling degree of the air in the cleansing section 9 of the above-described cleansing device 1. The air supplier 121 is controlled by the above-described controlling portion 190.

As well known, the air eject 122 adopts a vacuum principle caused by a convection current. The air eject 122 applied to the present invention is a T-shaped air eject 122. The T-shaped air eject 122 is composed of a vacuum inhaling pipe 123 that extends toward a lower portion and an air implanting pipe 124 and an exhausting pipe 125 connected to the vacuum inhaling pipe 123 and formed to cross the vacuum inhaling pipe 123 in a horizontal direction. At this time, in the portion where the vacuum inhaling pipe 123, the air implanting pipe 124, and the exhausting pipe 125 cross each other, an elevated portion 126 elevated inward to have a predetermined radius of curvature is formed to increase the area and air supplying power such that a larger amount of air is vacuum inhaled through the vacuum inhaling pipe 123. On the other hand, the elevated portion 126 has a plurality of through holes 127 in the portion connected to the vacuum inhaling pipe 123 such that the air vacuum inhaled through the vacuum inhaling pipe 123 can be rapidly discharged toward the exhausting pipe 125 via the plurality of through holes 127 (refer to Fig. 6).

In the air eject 122 having such a structure, the duct 51 of the upper cover 150 formed in the cleansing device 1 and the vacuum inhaling pipe 123 are air-tight connected to each other by a pipe P1 having tension against predetermined pressure, the air supplier 121 is connected to the air implanting pipe 124, and the above-described dust removing tank 162 is air-tight connected to the exhausting pipe 125 by a pipe P2. At this time, the air eject 122 is preferably positioned above the dust removing tank 162 such that the solvent 200 accommodated in the dust removing tank 162 cannot flow backward to the air eject 122. A second opening and closing valve 182 is preferably fastened to the pipe P2 that connects the dust removing tank 162 to the exhausting pipe 125 of the air eject 122 in order to control the vacuum inhaling amount by the dust removing tank 162 and to prevent the solvent 200 from flowing backward.

The pipe P2 connected to and fastened to the dust removing tank 162 is fastened to the lower portion or the lower end of the dust removing tank 162 such that the inhaled air that passed through the pipe P2 can pass through the solvent 200 accommodated in the dust removing tank 162 and that the dust contained in the vacuum inhaled air can be dissolved into the solvent 200 while passing through the solvent 200.

The dust removing tank 162 has an exhausting hole 163 formed through the upper end thereof. The exhausting hole 163 is air-tight connected to the duct 56 of the lower cover 55 of the above-described cleansing device 1 by a pipe P8. A fifth opening and closing valve 185 is provided in the portion adjacent to the exhausting hole 163. At this time, the pipe P7 connected to the outside is connected to the fifth opening and closing valve 185 such that the exhausting hole 163 and the pipes P7 and P8 are selectively opened and closed as the fifth opening and closing valve 185 is turned on/off to discharge the filtered clean air to the outside or to ventilate the above-described cleansing device 1 with the filtered clean air.

An eighth opening and closing valve 188 is provided in a predetermined portion of the pipe P8 and is connected to the above-described blowing means 140 by a pipe P9. According as the eighth opening and closing valve 188 is turned on/off, the clean air received through the pipe P8 is warmed while passing through the blowing means 140 or is discharged to the cleansing device 1 at room temperature to ventilate the cleansing device 1.

A principle in which the air is warmed by the blowing means 140 will now be described. The clean air is received by the blowing means 140 according to whether the eighth opening and closing valve 188 is opened or closed. The received clean air is heated to predetermined temperature while passing through the boiler 142 such that the warm air can be provided to the cleansing device 1 by the operation of the blowing fan 144.

Also, a supply pipe P3 is fastened to the upper side of the dust removing tank 162 to pass through the dust removing tank 162 such that a solvent 200 can be supplied from the outside to the dust removing tank 162. The supply pipe P3 is preferably connected to a supply tank (not shown) that accommodates a large amount of solvent A third opening and closing valve 183 is preferably fastened to the supply pipe P3 connected to and fastened to the dust removing tank 162 such that an appropriate amount of solvent 200 can be flown to the dust removing tank 162.

On the other hand, level sensors SW1 and SW2 are provided in the upper and lower portions inside the dust removing tank 162 to maintain the amount of the solvent 200 to be appropriate and are connected to the above-described controlling portion 190 to transmit respective level sensing signals to the controlling portion 190. The level sensors SW1 and SW2 are preferably arranged between the pipe P2 and the supply pipe P3 such that the inhaled air received from the air eject 122 passes through the solvent 200 and is discharged through the exhausting hole 163.

The dust removing tank 162 is connected to the water storing trap 132 that constitutes the ventilating/draining unit 130 as described later by pipes P4 and P5 connected to predetermined portions of a side wall of the dust removing tank 162.

To be more specific, the pipes P4 and P5 air-tightly pass through the lower portion and the upper portion of the side wall of the dust removing tank 162, the other end of the pipe P4 passes through and is connected to the upper end of the water storing trap 132 positioned below the dust removing tank 162, and a fourth opening and closing valve 184 is fastened to a predetermined portion of the pipe P4 adjacent to the water storing trap 132.

The upper side and the lower end of the water storing trap 132 are penetrated and are processed with sixth and seventh opening and closing valves 186 and 187. Here, the sixth opening and closing valve 186 receives the outside air to the inside of the water storing trap 132 or intercepts the outside air from the water storing trap 132 such that the inside of the water storing trap 132 is in the atmospheric state or the atmospheric state is made vacuous.

A water supply pipe P 10 for discharging the solvent 200 to the outside and the other end of the above-described pipe P5 are air-tight connected to the seventh opening and closing valve 187. At this time, a circulating pump 131 is provided in a predetermined portion of the pipe P5 to feed back the solvent 200 accommodated in the water storing trap 132 to the dust removing tank 162.

Thus, according as the seventh opening and closing valve 187 is turned on/off, the solvent 200 accommodated in the water storing trap 132 is fed back to the dust removing tank 162 or the saturated waste solvent is discharged to a drain.

Level sensors SW3 and SW4 provided in the upper and lower portions inside the water storing trap 132 perform opening and closing operations. The level sensors SW3 and SW4 are also connected to the above-described controlling portion 190 to transmit level sensing signals to the controlling portion 190.

The first to fourth opening and closing valves 181 to 184 and the sixth opening and closing valve 186 are formed of a single-acting opening and closing valve that simply opens and closes a water flow channel and/or an air flow channel according as the same is turned on/off. The fifth, seventh, and eighth opening and closing valves 185, 187, and 188 formed of a double-acting opening and closing valve that changes a water flow channel and/or an air flow channel according as the same is turned on/off (refer to Figs. 7 to 10).

Figs. 7 and 8 illustrate a state in which the filtered clean air is discharged to the outside or is flown to the above-described cleansing device 1 in accordance with the operation state of the opening and closing valve formed in the above-described filtering unit 160, in particular, the fifth opening and closing valve 185 that is the double-acting opening and closing valve.

Figs. 9 and 10 illustrate a state in which the solvent 200 is fed back to the above-described dust removing tank 162 or is discharged to the outside in accordance with the operation state of the opening and closing valve formed in the above-described ventilating/draining unit 130, in particular, the seventh opening and closing valve 187 that is the double-acting opening and closing valve.

The first to eighth opening and closing valves 181 to 188 are preferably formed of a solenoid valve having high electronic sensitivity. Water that is adaptive to environments and that is inexpensive is preferably used as the solvent. This invention may, however, be embodied in many different forms and should not be construed as being limited to the embodiment set forth herein; rather, the embodiment is provided so that this disclosure will be thorough and complete, and will fully convey the concept of the invention to those skilled in the art.

On the other hand, in Fig. 11, the structures of the lower cover 55 and the duct 56 formed under the lower cover 55 are improved such that the air can be more rapidly flown to the cleansing section 9 according as the air is diffused into a wider section and eddy current is generated when the filtered clean air is received to the cleansing device 1 and is flown to the cleansing section 9.

To be more specific, a plurality of eddy current generating wings 56a are formed on the internal circumferences of the lower cover 55 and the duct 56 to be separated from each other by the same distance. The plurality of eddy current generating wings 56a are formed on the inner wall 56b of the duct 56 so as to twist such that the air flown to the duct 56 is guided along the eddy current generating wings 56a and is rotated to be widely diffused into the cleansing section 9 as eddy current. Thus, the air is flown to the entire surfaces of the fruits 2 that pass through the cleansing section 9 at speed higher than the speed at which the fruits 2 pass through the cleansing section according to the conventional technology such that the dew formed on the surfaces of the fruits can be dried within a shorter time, that the alien substances that exist in the plurality of furs 40a formed on the brush rolls 40 can be automatically cleansed, and that the dusts generated during the fruit cleansing processes can be rapidly led to an upper portion.

The operation principle of the fruit cleansing device 100 including the dust removing means 110 according to the present invention having the above-described structure will now be described in detail. Considering that fruits are harvested in autumn and winter, it is presumed that the boiler 142 that constitutes the blowing means 140 as described later is operated.

When the fruit cleansing device 100 according to the present invention operates, in accordance with the command of the above-described controlling portion 190, the driving motor 31 that constitutes the cleansing device 1 operates to rotate the plurality of brush rolls 40 at uniform speed by power transmitting means 38. At this time, the surfaces of the fruits 2 to be cleansed are rubbed with the plurality of furs 40a formed on the brush rolls 40 and, at the same time, the fruits 2 to be cleansed are transmitted at uniform speed.

At the same time, in accordance with the command of the controlling portion 190, the above-described blowing means 140 and dust removing means 110 start to operate.

The blowing means 140 and the dust removing means 110 optimize the temperature and the amount of the air and the vacuum inhaling degree of the dusts generated during the cleansing processes by a sensor portion 150 composed of a temperature sensor 152 and a humidity sensor 154 inside the above-described cleansing device 1.

To be more specific, difference in temperatures between the inside and the outside of the cleansing device 1 generates dew on the surfaces of the fruits 2. The boiler 142 that constitutes the blowing means 140 operates to provide air heated to a predetermined temperature to the cleansing section 9 through the blowing fan 144 such that the dew generated on the surfaces of the fruits 2 is dried.

However, since the cleansing section 9 is air tight, when the above-described drying process is continuously performed in the cleansing section 9, humidity becomes significant high. In order to prevent the cleansing section from becoming excessive humid, the humidity sensor 154 continuously senses the humidity in the cleansing section 9 to transmit the humidity to the controlling portion 190. When the humidity is higher than a reference value, the controlling portion 190 increases the speed at which the blowing fan 144 rotates and, at the same time, lowers the set temperature of the boiler 142. Accordingly, a large amount of air having the temperature close to the room temperature is diffused into the cleansing section 9 and, at the same time, the inhaling unit 120 that constitutes the dust removing means 110 is high-power operated such that the cleansing section 9 is more rapidly vacuumized to control the humidity.

When the humidity is low, operations reverse to the above-described operations are performed such that the air of an appropriate temperature is supplied to the cleansing section 9 and that the dusts generated during the cleansing processes are vacuum inhaled by the dust removing means 110. The temperature sensor 152 prevents the boiler 142 from excessively operating such that warm air having the temperature that does not deteriorate the freshness of the fruits can be flown to the fruits 2 to be cleansed.

Thus, the cleansing section 9 of the above-described cleansing device 1 is maintained to have appropriate humidity and temperature, which can be performed by continuously transmitting signals to the above-described controlling portion 190 such that the controlling portion 190 controls the above-described blowing means 140 and dust removing means 110.

The operation principle of the dust removing means 110 will be described in more detail. As described above, in order to control the vacuum inhaling amount, the output of the air supplier 121 is increased or the degree to which the first opening and closing valve 181 is opened is controlled.

As described above, the air is continuously vacuum inhaled while predetermined pressure is applied to the pipe P2. Then, in accordance with the command of the controlling portion 190, the second opening and closing valve 182 is intermittently opened and closed or the degree to which the second opening and closing valve 182 is opened is controlled such that the pipe P2 can be under uniform pressure. This can be performed by applying pressure larger than the pressure of the solvent 200 accommodated in the dust removing tank 162 to prevent the solvent 200 from flowing backward and to more quickly flow the vacuum inhaled air to the solvent 200 such that the humidity and dusts in the vacuum inhaled air can be dissolved in the solvent 200.

The second opening and closing valve 182 is preferably closed before the air supplier 121 is stopped to prevent the solvent 200 from flowing backward to the inhaling unit 120.

As described above, the clean air removed of the alien substances such as dusts is discharged to the outside or is flown to the cleansing device 1 to ventilate the cleansing device 1 with the air according as the fifth opening and closing valve 185 formed on the upper end of the dust removing tank 162 is turned on/off. The clean air is supplied to the cleansing device 1 as warm air of a predetermined temperature via the above-described blowing means 140 or is directly supplied to the cleansing device 1 as air of the room temperature according as the eighth opening and closing valve 188 is turned on/off. The fifth and eighth opening and closing valves 185 and 188 sets the flow channel of the air and is opened and closed in accordance with the temperature and the humidity detected by the sensor portion 150, which is performed in accordance with the command of the above-described controlling portion 190.

As described above, when a dust removing work proceeds for a predetermined time, the solvent 200 accommodated in the dust removing tank 162 is contaminated. The contaminated solvent must be discharged to the outside and the solvent 200 as much as the discharged solvent must be supplied from the outside.

To be more specific, the solvent 200 circulates through the water storing trap 132 that constitutes the ventilating/draining unit 130 in units of predetermined time. When the solvent 200 circulates determined number of times, the solvent 200 is discharged to the outside through the water storing trap 132. To be specific, the solvent is maintained to have an appropriate amount by the level sensors SW1 and SW2 formed in the dust removing tank 162. The level sensors SW1 and SW2 transmit the signals thereof to the above-described controlling portion 190 and the controlling portion 190 commands the third opening and closing valve 183 to be opened when the solvent is not detected by the level sensor SW2 such that the solvent 200 is supplied from a supply tank (not shown) to the dust removing tank 162. Then, the solvent is detected by the level sensor SW1, the controlling portion 190 commands the third opening and closing valve 183 to be closed such that an appropriate amount of solvent always remains in the dust removing tank 162.

In order to maximize dust removing efficiency, it is effective that the solvent 200 accommodated in the dust removing tank 162 continuously circulate through the above-described water storing trap 132 or that the solvent 200 accommodated in the dust removing tank 162 circulate through the above-described water storing trap 132 in units of predetermined time. Thus, according as the seventh opening and closing valve 187 and the above-described circulating pump 131 are turned on/off in accordance with the command of the controlling portion 190, the solvent 200 is circulated.

According as the dust removing work proceeds, the solvent 200 is contaminated. The waste solvent is discharged to the outside according as the above-described seventh opening and closing valve 187 is turned on/off.

### INDUSTRIAL APLICABILITY

As described above, according to the present invention, the clean air on which the dust removing work is performed by the dust removing means for dissolving only dusts without exchanging filters is flown to the corresponding device for performing the fruit cleansing processes again to be re-flown to the fruits to be cleansed. Accordingly, dusts are not re-flown to a work place such that it is possible to provide clean and comfortable working environments, and to automate dust removing processes, to save maintaining and repairing expenses, and to maximize energy efficiency.

## Claims

1. A fruit cleansing apparatus comprising:
a cleansing device for separating alien substances attached to the surfaces of fruits from the fruits by predetermined friction;
an inhaling unit for vacuum inhaling dusts separated from the fruits; and
a filtering unit connected to the inhaling unit to filter the dusts, wherein the inhaling unit comprises an air eject connected to the cleansing device to vacuum inhale the dusts and an air supplier for supplying high pressure air to the air eject, and wherein the filtering unit has exhausting holes penetrating the upper end thereof, has its lower end penetrated by a pipe air-tight connected to an exhausting pipe of the air eject, and has a dust removing tank accommodating a predetermined amount of solvent inside.

2. A fruit cleansing apparatus according to claim 1, wherein an opening and closing valve is added to the pipe to control the amount of vacuum inhaled air.

3. A fruit cleansing apparatus according to claim 1, wherein a supply pipe for supplying the solvent from the outside is fastened to the dust removing tank and an opening and closing valve for supplying and intercepting a solvent is added to the supply pipe adjacent to the dust removing tank.

4. A fruit cleansing apparatus according to claim 1, further comprising a ventilating/draining unit connected to the dust removing tank and the pipe to feed back the solvent accommodated in the dust removing tank to the dust removing tank or to discharge the solvent accommodated in the dust removing tank to the outside.

5. A fruit cleansing apparatus according to claims 1 to 4, wherein the solvent is water or oil.

6. A fruit cleansing apparatus according to claims 2 or 3, wherein the opening and closing valve is a solenoid valve or a pneumatic valve.

7. A fruit cleansing apparatus according to claim 1, further comprising blowing means composed of a boiler air-tight connected to the exhausting holes of the dust removing tank by the pipe and a blowing fan connected to the boiler to flow air to the cleansing device.

8. A fruit cleansing apparatus according to claim 7, wherein the exhausting holes of the dust removing tank are connected to the boiler by the pipe such that the filtered clean air is flown to the blowing means.

9. A fruit cleansing apparatus according to claim 8, wherein an opening and closing valve is added to the pipe in a portion adjacent to the blowing means.

## Patentansprüche

1. Fruchtreinigungsgerät, aufweisend:
eine Reinigungsvorrichtung zum Abtrennen von an den Oberflächen von Früchten anhaftenden Fremdsubstanzen von den Früchten durch vorbestimmte Reibung;
Absaugeinheit zur Unterdruckabsaugung von den Früchten getrennter Stäube; und
eine mit der Absaugeinheit verbundene Filterungseinheit zum Filtern der Stäube, wobei die Absaugeinheit eine mit der Reinigungsvorrichtung verbundene Luftstrahlpumpe zum Absaugen der Stäube durch Unterdruck und eine Luftzuführungseinrichtung zum Zuführen von Hochdruckluft zu der Luftstrahlpumpe aufweist, und wobei die Filterungseinheit ihr oberes Ende durchdringende Auslasslöcher hat, an ihrem unteren Ende von einem Rohr durchdrungen ist, das luftdicht mit einem Auslassrohr der Luftstrahlpumpe verbunden ist, und einen Staubentfernungsbehälter hat, der eine vorbestimmte Menge von Lösungsmittel im Inneren aufnimmt.

2. Fruchtreinigungsgerät nach Anspruch 1, wobei ein öffnendes und schließendes Ventil dem Rohr hinzugefügt ist, um die Menge der durch Unterdruck angesaugten Luft zu steuern.

3. Fruchtreinigungsgerät nach Anspruch 1, wobei ein Zuführungsrohr zum Zuführen des Lösungsmittels von Außen an dem Staubentfernungsbehälter befestigt ist und ein öffnendes und schließendes Ventil zum Zuführen und Unterbrechen eines Lösungsmittels dem Zuführungsrohr neben dem Staubentfernungsbehälter hinzugefügt ist.

4. Fruchtreinigungsgerät nach Anspruch 1, welches ferner eine Entlüftungs/Entleerungseinheit aufweist, die mit dem Staubentfernungsbehälter und dem Rohr verbunden ist, um das in dem Staubentfernungsbehälter aufgenommene Lösungsmittel in den Staubentfernungsbehälter zurückzuführen oder das in dem Staubentfernungsbehälter aufgenommene Lösungsmittel nach außen abzugeben.

5. Fruchtreinigungsgerät nach den Ansprüchen 1 bis 4, wobei das Lösungsmittel Wasser oder Öl ist.

6. Fruchtreinigungsgerät nach den Ansprüchen 2 oder 3, wobei das öffnende und schließende Ventil ein Solenoidventil oder ein pneumatisches Ventil ist.

7. Fruchtreinigungsgerät nach Anspruch 1, das ferner eine Gebläseeinrichtung, die aus einem Kessel besteht, der luftdicht mit den Auslasslöchern des Staubentfernungsbehälters durch das Rohr verbunden ist, und ein mit dem Kessel verbundenes Gebläse aufweist, um Luft zu der Reinigungsvorrichtung strömen zu lassen.

8. Fruchtreinigungsgerät nach Anspruch 7, wobei die Auslasslöcher des Staubentfernungsbehälters mit dem Kessel durch das Rohr dergestalt verbunden sind, dass die gefilterte Reinluft zu der Gebläseeinrichtung strömt.

9. Fruchtreinigungsgerät nach Anspruch 8, wobei ein öffnendes und schließendes Ventil dem Rohr in einem Abschnitt in der Nähe der Gebläseeinrichtung hinzugefügt ist.

## Revendications

1. Appareil de nettoyage de fruits, comprenant :
un dispositif de nettoyage pour séparer des substances étrangères attachées aux surfaces de fruits des fruits par frottement prédéterminé ;
une unité d'aspiration pour aspirer des poussières séparées des fruits ; et
une unité de filtrage reliée à l'unité d'aspiration pour filtrer les poussières, dans lequel l'unité d'aspiration comprend un refoulement d'air relié au dispositif de nettoyage pour aspirer les poussières et un fournisseur d'air pour fournir de l'air à haute pression au refoulement d'air, et dans lequel l'unité de filtrage comporte des trous d'échappement pénétrant l'extrémité supérieure de celle-ci, l'extrémité inférieure de l'unité de filtrage est pénétrée par un tuyau relié hermétiquement à l'air à un tuyau d'échappement du refoulement d'air, et l'unité de filtrage comporte un réservoir d'évacuation de poussière recevant une quantité prédéterminée de solvant à l'intérieur de celui-ci.

2. Appareil de nettoyage de fruits selon la revendication 1, dans lequel un robinet d'ouverture et de fermeture est ajouté au tuyau pour réguler la quantité d'air aspiré.

3. Appareil de nettoyage de fruits selon la revendication 1, dans lequel un tuyau d'alimentation pour alimenter le solvant de l'extérieur est branché au réservoir d'évacuation de poussière et un robinet d'ouverture et de fermeture pour permettre et arrêter l'alimentation d'un solvant est ajouté au tuyau d'alimentation adjacent au réservoir d'évacuation de poussière.

4. Appareil de nettoyage de fruits selon la revendication 1, comprenant en outre une unité de ventilation/drainage reliée au réservoir d'évacuation de poussière et au tuyau pour renvoyer le solvant reçu dans le réservoir d'évacuation de poussière vers le réservoir d'évacuation de poussière ou pour décharger le solvant reçu dans le réservoir d'évacuation de poussière à l'extérieur.

5. Appareil de nettoyage de fruits selon l'une quelconque des revendications 1 à 4, dans lequel le solvant est de l'eau ou de l'huile.

6. Appareil de nettoyage de fruits selon la revendication 2 ou 3, dans lequel le robinet d'ouverture et de fermeture est une électrovanne ou une vanne pneumatique.

7. Appareil de nettoyage de fruits selon la revendication 1, comprenant en outre des moyens de soufflage composés d'une chaudière reliée hermétiquement à l'air aux trous d'échappement du réservoir d'évacuation de poussière par le tuyau et un ventilateur soufflant relié à la chaudière pour faire circuler de l'air vers le dispositif de nettoyage.

8. Appareil de nettoyage de fruits selon la revendication 7, dans lequel les trous d'échappement du réservoir d'évacuation de poussière sont reliés à la chaudière par le tuyau de sorte que l'air propre filtré circule vers les moyens de soufflage.

9. Appareil de nettoyage de fruits selon la revendication 8, dans lequel un robinet d'ouverture et de fermeture est ajouté au tuyau dans une portion adjacente aux moyens de soufflage.
